# EUROPÄISCHE PATENTANMELDUNG

(11) **EP 3 644 245 A1**
(43) Veröffentlichungstag der Anmeldung: **29.04.2020**
(21) Anmeldenummer: 19000487.9
(22) Anmeldetag: 24.10.2019
(51) Int. Cl.: G06Q 10/06

(54) **COMPUTERGESTÜTZTES LEIT-SYSTEM UND VERFAHREN ZUR OPTIMIERUNG VON WERKZEUGABMUSTERUNGEN UND SPRITZGUSS TECHNIK PROZESSEN**

(30) Priorität: 27.10.2018 DE 102018008516
(71) Anmelder: Schötz, Andreas, 90592 Schwarzenbruck (DE)
(72) Erfinder: Schötz, Andreas, 90592 Schwarzenbruck (DE)
(74) Vertreter: Dorn, Dietmar

(57) **Zusammenfassung**

Das Computergestützte Leit-System und Verfahren zu Optimierung und Werkzeugabmusterungen von Spritzgieß Technik- Prozessen stellt eine neue innovative und einzigartige Lösung zur technischen Findung von optimalen Spritzgießprozesses da. Die technischen Arbeiten des Bedieners werden durch erzeugte Ablaufanweisungen, basierend auf den Daten der Informationsschicht und der individuellen, durch den Bediener einzugebenden Daten und daraus abgeleiteten Rechen- oder Bewertungs- Operationen, automatisch standardisiert, in einer Dokumentationsebene digitalisiert und stehen folglich nachhaltiger für das gesamte Spritzgießunternehmen zur Verfügung.

## Beschreibung

Die Erfindung betrifft ein computergestütztes Leit-System und Verfahren zur Optimierung von Werkzeugabmusterungen in Spritzguss Technik Prozessen und die Optimierung der Spritzguss Technik Prozesse selbst.

In den Bereichen von Spritzguss Technik Prozessen, der Produktion von Spritzgussteilen und deren Umsetzung und/oder Einführung nimmt auf der einen Seite die Komplexität der Kunststoffbauteile stetig zu, wobei auf der anderen Seite die Projektphasen von der Idee bis zur Serienfertigung immer kürzer werden. Die kunststoffverarbeitenden Unternehmen müssen sich dieser Herausforderung tagtäglich neu stellen. Eine wichtige Rolle für den späteren Erfolg oder das Erreichen von Zielvorgaben für die Serienproduktion spielt dabei die Werkzeugabmusterungsphase. Der komplexe Prozess der Werkzeugabmusterung bildet den Grundstein für einen wirtschaftlichen Spritzgießprozess, bei welchem unterschiedliche Mitarbeiter und Fachabteilungen im Unternehmen ineinandergreifen. Aufgrund immer kürzerer Projektphasen stellt dies jedes Unternehmen vor eine fachliche und logistische Herausforderung. Immer mehr gerät dieser wichtige Prozess in der kunststoffverarbeitenden Industrie zur Nebensache wodurch viele Unternehmen aufgrund instabiler Prozesse zeitliche Ressourcen verlieren oder mit unnötigen Qualitätsproblemen kämpfen.

Werkzeugabmusterung findet in Spritzgussunternehmen bevorzugt bei jedem Neuwerkzeug, einem Materialwechsel, bei Prozessoptimierungen, Problemen oder einer Werkzeugkorrektur statt und erlaubt beispielsweise mechanische Mängel am Spritzgusswerkzeug zu erkennen oder Maschineneinstellparameter zu ermitteln.

Die Komplexität des Werkzeugabmusterungsprozesses begründet sich auf der Notwendigkeit des Ineinandergreifens unterschiedlicher Mitarbeiter und deren Fachabteilungen im Unternehmen. Dabei ist zum einen der Fachkräftemangel ein großes Problem, da bei bekannten Abmusterungsprozessen die fachliche Kompetenz des Mitarbeiters eine große Rolle spielt. Weiter ist die schlechte bis zum Teil fehlende Kommunikation und/oder Absprachen aufgrund fehlender Aufzeichnungen oder nichtexistierender Ablaufmechanismen (fehlender Standard) nahezu unmöglich. Der Abmusterungsprozess basiert auf der Erfahrung des Mitarbeiters an der Spritzgussmaschine und meist aus einer losen Blattsammlung und unvollständigen, nicht reproduzierbaren Angaben oder Notizen. Dabei werden sehr oft wichtige Arbeitsschritte vergessen oder übergangen und es findet in der Regel kein Informationsfluss während und nach der Abmusterung statt. Dies führt zu meist sehr vielen Optimierungsschleifen bis zur eigentlichen Serienfertigung. Dadurch entstehen den Unternehmen große zeitliche Engpässe bei den benötigten Maschinenressourcen sowie Mehrkosten für die Abmusterung oder Optimierung. Weiter sind aufgrund nicht optimal geführter Abmusterungsprozesse extreme Nachteile für das Unternehmen zu verbuchen wie z. B. zu langer Zykluszeiten, stark schwankender Formteilqualitäten und dadurch höheren Ausschussquoten und entsprechender Kundenreklamationen, höherer Werkzeugverschleiß und die Verschlechterung der Wirtschaftlichkeit und die Produktivität des Prozesses.

Der vorliegenden Erfindung liegt daher die Aufgabe zugrunde ein System und/oder Verfahren bereit zu stellen, welches die genannten Nachteile überwindet und zu einer Erhöhung der Prozesssicherheiten und Qualität der späteren Serienfertigung führt.

Diese Aufgabe wird gelöst durch die Merkmale des Anspruchs 1. Vorteilhafte Ausgestaltungen und Weiterbildungen sind in den abhängigen Ansprüchen angegeben.

Erfindungsgemäß ist ein computergestütztes Leit-System und Verfahren zur Optimierung von Werkzeugabmusterungen und Spritzguss Technik-Prozessen mit einer Bedienerführung, wobei für eine Bedienoberfläche für einen Abmusterungsprozess in einer Bedienerschicht anwenderspezifische und/oder prozessspezifische, eigenständige Daten wenigstens einer Informationsschicht und/oder Referenzdatenbank mittels einer dynamischen Schnittstelle implementierbar sind und die Gesamtinformationen über den Ablauf des Spritzgussprozesses in einer, angepasst an die eingegebenen Daten und/oder Daten von integrierter Rechenoperationen und der Daten der wenigstes einen Informationsschicht in der Ablaufstruktur auf einem Bildschirm darstellbar und in einer Dokumentationsebene dauerhaft ablegbar und verfügbar sind, wobei dabei der Bediener durch den Prozess geführt wird und der Ablauf des Abmusterungsprozesses reproduzierbar ist und mit individuell einzugebenden Parametern in der Bedienerschicht, das Ergebnis und/oder die Rechenergebnisse des Abmusterungsprozesses veränderbar und/oder vorherbestimmbar und optimierbar sind.

Durch das erfmdungsgemäße Leit-System und Verfahren zur Optimierung von Werkzeugabmusterungen und Spritzguss Technik-Prozessen wird direkt ein Standard für die Abmusterung im Unternehmen eingeführt.

Das computergestützte Leitsystem und Verfahren zur Optimierung von Spritzgießtechnik Prozessen unterstützt den Anwender Systematisch, strukturiert und aktiv beim Aufbau eines technischen Spritzgießprozesses.

Das Leitsystem führt den Anwender hierbei zum optimalen Betriebspunkt eines Spritzgießprozesses. Neben der aktiven, technischen Prozess- und/oder Verfahrensführung trägt das Leit-System zur Umsetzung eines standardisierten technischen Prozesses bei und ist wichtige Grundlage für Dokumentation aller weiterführenden technischen Optimierungsprozesse. Die Erfindung wird nachstehend ihrer Merkmale und Vorteile näher erläutert.

### Technischer Prozessablauf

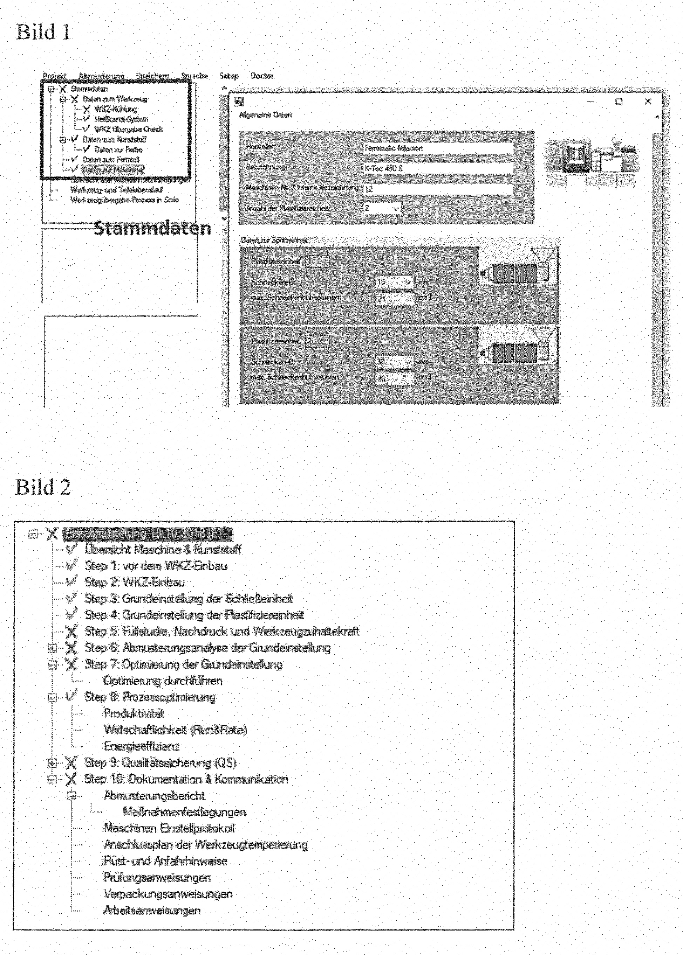

### 1) Technische Stammdaten anlegen (Bild 1)

- Alle technischen Daten zu dem Spritzgießwerkzeug (z. B. Spezifikationen, Anzahl der Kavitäten, Kaltkanal oder Heißkanal, etc.), dem Formteil (z. B. Dimensionen, Wandstärken, projizierte Fläche, Volumen etc.) der Spritzgießmaschine (z. B. Zuhaltekraft, Schneckendurchmesser, max. Dosiervolumen, etc.) sowie dem zu verarbeiteten technischen Kunststoffs (z. B. Verarbeitungsparameter, physikalische Eigenschaften etc.) werden durch den Bediener in der vorgegebene Menüführung erstellt und über eine integrierte Datenbank abgelegt.
- Alle angelegten technischen Daten dienen im weiteren Prozessablauf zur aktiven Unterstützung des Bedieners (z. B. Abfrage des aktuellen technischen Prozess-Ist-Zustandes wie Schneckenhub oder Verweilzeit der Schmelze, erforderliche Zuhaltekraft, etc.)
- Die technischen Stammdaten dienen den Bedienern (Fachabteilungen) im gesamten technischen Abmusterungs-bzw. Optimierungsprozess als Informations- und Datentransfer.
- Die Bedienerführung wird mit der integrierten Funktion "Rotes Kreuz" bei nicht ausgefülltem Zustand und bei ausgefülltem Zustand mit einem "Grünen Haken" als Kontrolle begleitet.

### Bild 1: zeigt einen Strukturbaum der Stammdaten und Beispielauszug aus Stammdaten (Daten zur Spritzgießmaschine)

### 2) Neue Abmusterung mit ausgewählter Kategorie für weitere operative Prozessdurchführung anlegen

- Der Bediener wählt ausfolgenden Kategorien wie Erstabmusterung, Folgeabmusterung, Prozessoptimierung, Kundenreklamation oder Materialmuster aus.
- Das System übernimmt die Auswahl mit Datum und möglicher Bemerkung
- Für die operative technische Durchführung wird ein Strukturbaum durch das System erzeugt
- Liegt z. B. eine Folgeabmusterung vor, so kann der Bediener unter dem Feld "Übernahme von Abmusterungswerten" alle vorgetätigten ausgewählten Arbeiten übernehmen und gezielt die noch offenen technische Punkte abprüfen ggfs. weitere Maßnahmen im System hinterlegen und umsetzen. Entscheidet sich der Bediener für die Option "Übernahme von Abmusterungswerten", so werden durch das System alle Checkboxen die in der vorherigen Abmusterung mit Nein angekreuzt wurden, mit speziellen Roten Rahmen dargestellt. So kann schnell und effizient die noch offenen Punkte aus der vorherigen Abmusterung in der Folgeabmusterung überprüft werden. Das System verknüpft hierbei alle z. B. Erstabmusterungen mit der nächsten Folgeabmusterungen sowie die Folgeabmusterung mit der nächsten Folgeabmusterung usw. Diese Funktion steht dem Bediener ebenfalls bei Prozessoptimierungen und Materialmuster bereit.

### 3) Operative Bedienerführung durch den technischen Prozess ()

### Bild 2 zeigt einen Auszug operative Bedienerführung (Strukturbaum) durch den technischen Prozess

### i. Individuelle Bedienerführung durch den User (Übersicht Maschine & Kunststoff)

- Alle durch den User erstellten Stammdaten werden durch das System automatisch übernommen und im weiteren Verlauf im erstellten Strukturbaum (weiter als Bedienerführung) bereitgestellt bzw. intern weiterverarbeitet.
- Liegt nun beispielsweise bei einer Folgeabmusterung ein Maschinenwechsel oder ein Materialversuch vor, so kann der User über eine Menüführung individuell für diese einzelne Werkzeugabmusterung die Maschine oder das Material abändern, ohne alle anderen bereits mit den vorherigen Stammdaten durchgeführten Werkzeugabmusterungen ebenfalls zu verändern.

### ii. Funktionale Inhalte zur operativen Bedienerführung (Step 1-10):

- Computerimplementierte Menüführung leitet den Bediener aktiv durch den gesamten laufenden technischen Prozess einer Werkzeugabmusterung bzw. Prozessoptimierung im Unternehmen.
- Die operative Bedienerführung ist inhaltlich so aufgebaut, dass alle beteiligten Mitarbeiter (unterschiedlicher benötigter Fachabteilungen) im Unternehmen den technischen Prozess mit Hilfe der computerimplementierten Abarbeitungsplattform und als Weichenstellung durchlaufen, um beispielsweise ein aufgetretenes technisches Problem mit eignen Maßnahmenfestlegungen auf dieser Grundlage lösen zu können.
- Alle erstellten Daten, Grafiken, Bilder und Erkenntnisse der einzelnen Schritte werden automatisch in einer internen Datenbank abgespeichert.
- Der User bearbeitet alle entscheidenden Prozessgestaltungsmerkmale, Verfahrensschritte wie z. B. Einstellung der Grundeinstellung von Schließ- und Plastifiziereinheit, der Abmusterungsanalyse oder um ein technisches Problem zu lösen mit anschließender Prozessoptimierung, mit Vorlagen, Checklisten und Rechenoperationen sowie der eigenen Datenerfassung wie Bilder, Grafiken, empirisch ermittelten Werten und Dokumentationen.
- Durch dynamische Checklisten, selbst von dem User gestalt- bzw. erweiterbar, werden alle wichtigen Schritte parallel im aktiven Prozess bearbeitet und auf Umsetzung geprüft.
- Die Funktion "Checklisten -Review" protokoliert eigenständig alle mit "nein" angekreuzten Fragen unter den Kategorien "Prozess", "Werkzeug" oder "Formteil" automatisch im späteren Werkzeugabmusterungsbericht. Dies führt zu einer hohen Zeitersparnis, da die Dokumentationsebene aktiv während der technischen Prozessbewertung durch den Bediener und - Gestaltung an der Spritzgießmaschine, gleichzeitig fertig unter Step 10 implementiert wird.

### iii. Inhalte der Schritte aus der operativen Bedienerführung (Step 1-10)

- Unter **"vor dem Werkzugeinbau" (Step 1)** und **"Werkzeugeinbau" (Step 2)** werden alle wichtigen technischen Prozessschritte systematisch durch dem Bediener abgearbeitet und mit Hilfe von dynamisch aufgebauten Checklisten aus dem System bei der Umsetzung abgeprüft.
- Bei **Grundeinstellung der Schließeinheit (Step 3)** werden dem Bediener gezielt alle wichtigen Arbeitsgänge aufgezeigt, die notwendig sind um richtige technische Grundparameter zu finden und in der Spritzgießmaschine selbst einzustellen. Weiter prüft das System aufgrund der vom Bediener hinterlegten Stammdaten die notwendige erforderliche Zuhaltekraft (kN) der Spritzgießmaschine.
- In **Grundeinstellung der Plastifiziereinheit (Step 4)** leitet das System analog zu Step 3 dem Bediener bei der aktiven Ermittlung und Einstellung aller benötigten Maschineneinstellparameter. Unter anderen greift das System auf Stammdaten zurück, z. B. für das Errechnen des erforderlichen Schussvolumens oder der theoretischen Kühlzeit des Formteils.
- Unter **Füllstudie, Nachdruck und Werkzeugzuhaltekraft (Step 5)** führt das System durch den Formteilfüllprozess sowie deren anschließend wichtiger technischen Bewertung und notwendigen Dokumentation. Im weiteren Schritt leitet das System die Einstellung der Nachdruckphase an. Dabei wird dem Bediener über Unterlagen und Vorgaben im System zum richtigen empirischen Ermitteln z. B. der Nachdruckzeit angeleitet. Auch die Ermittlung der tatsächlich erforderlichen Zuhaltekraft (kN) leitet das System an. Folglich werden hier schon für den späteren Serienprozess wichtige Einstellungen und Optimierungen getroffen werden.
- Im Punkt **Abmusterungsanalyse (Step 6)** wird dem Bediener aktiv durch das System bei der Bewertung des laufenden technischen Prozesses wie z. B. optische/thermische Prüfung und Bewertung des Formteils, optische/thermische Prüfung sowie Bewertung des Spritzgießwerkzeuges und Funktionale Bewertung des Spritzgießwerkzeug begleitet.
   Weiter basierend auf den vorgegebenen Eingabemöglichkeiten der Stammdaten durch dem Bediener, bewertet das System die richtige Auslegung der verwendeten Spritzgießmaschine und notwendigen Peripherie wie z.B. Materialtrocknungsanlage. Das System weist dem Bediener mit Hilfe eines Ampelsystems auf mögliche vorhandene Probleme hin.
- Bei auftretenden technischen Prozessproblemen hat der Bediener die Möglichkeit in **Optimierung der Grundeinstellung (Step 7),** eine durch das System vorgegebene Optimierungsmethodik frei auszuwählen und mit Eingabe seiner beispielsweisen gewählten Maschineneinstellparameter, diese durch das System begleitend umzusetzen bzw. auszuführen. Alle durch den Bediener erfolgten Versuchsreihen werden durch das System automatisch in eine Auswertung der Versuche übernommen. Dort kann der Bediener die Resultate eigens bezüglich Vermessung, optische Prüfung oder Funktionsprüfung ergänzen und auswerten.
- Das System unterstützt unter **Prozessoptimierung (Step 8)** dem Bediener aktiv bei der Bewertung und Optimierung der Produktivität, der Wirtschaftlichkeit und Energieeffizienz des aufgebauten neuen Spritzgießprozesses.
- Für die **Qualitätssicherung (Step 9) in** der Spritzgießmaschine generiert das System auf Grundlage von ausgewählten Faktoren durch den Bediener eigens optimale Toleranzeingriffsgrenzen, die anschließend in der Spritzgießmaschine unter der Qualitätsüberwachung übernommen werden können.
- Unter **Dokumentation und Kommunikation (Step 10)** werden alle bei der aktiven Durchführung gewonnen Problemstellungen, Daten und Fakten des neu aufgebauten technischen Prozesses zusammengetragen. Basierend auf dem integrierten Checklistenlisten-Review kann dem Bediener unter dem
   Werkzeugabmusterungsbericht alle Prozessabweichungen vom System dargestellt einsehen und anschließend bewerten und eigens dazu eine Dokumentation mit Texten, Bildern etc. erstellen bzw. erweitern. Das intergierte Maschineneinstellprotokoll ist im System dynamisch aufgebaut und kann inhaltlich als Auswahl mit Sonderverfahren durch den Bediener individuell erweitert werden. Das System übernimmt aus den einzelnen Steps 1-10 alle wichtigen Werte sowie Informationen und trägt diese automatisch in das Protokoll ein.

### iv. Werkzeugfreigabeprozess oder Folgeabmusterung

- Auf Grundlage von auswählbaren Entscheidungsmerkmalen in Step 10 durch den Bediener, führt das System diesen weiter durch den technischen Prozessablauf unter der Auswahl "Folgeabmusterung" oder "Werkzeugfreigabeprozess".

### a) Auswahl "Folgeabmusterung"

- Liegen technische Probleme im Prozess, im Spritzgießwerkzeug oder am Kunststoffformteil vor, die weitere technische Maßnahmen erfordern, so kann der Bediener diese auf Grundlage der eigens aus der Bedienerführung ermittelten Erkenntnisse, Werte, Bilder, Grafiken und Checklisten der Werkzeugabmusterung oder Prozessoptimierung verarbeiten und gezielt technische Maßnahmen festlegen.
- Das System erkennt automatisch, wenn Maßnahmen bei einer Werkzeugabmusterung oder Prozessoptimierung in den entsprechenden Vorlagen mit Betreff und Datum der notwendigen Umsetzung getroffen wurden. Weiter übermittelt das System in einer Übersicht alle Maßnahmenfestlegungen. Die Übersicht aller Maßnahmen dient dem Bediener als "Tracking" oder Projektstandabfrage und kann bei erfolgreicher Umsetzung auf der jeweiligen Maßnahme auf "Grün" gesetzt werden.
- Sobald die jeweilige technische Maßnahme durch den Bediener auf "Grün" gesetzt wurde, wird diese automatisch unter Werkzeug- und Teilelebenslauf durch das System archiviert. So kann eine chronologische Übersicht aller erforderlichen technisch umgesetzten Maßnahmen über die gesamte Produktionslaufzeit (Produktlenbenszyklus) des jeweiligen Artikels bzw. Formteils eingesehen werden.

### b) Auswahl "Werkzeugfreigabeprozess"

- Liegen keine technischen Prozessprobleme mehr vor, z. B. nach einer durchgeführten Folgeabmusterung, so kann der Bediener im Schritt zehn einen "Freigabeprozess" auswählen.
- Das System führt anschließend dem Bediener, analog zur Durchführung der Werkzeugabmusterung an der Maschine, durch diesen technischen Freigabeprozess mit wichtigen automatischen Abfragen und Checkboxen.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Computergestütztes Leit-System und Verfahren zur Optimierung von Werkzeugabmusterungen und Spritzguss Technik-Prozessen mit einer Bedienerführung
**dadurch gekennzeichnet,**
**dass** für eine Bedienoberfläche für einen Abmusterungsprozess in einer Bedienerschicht anwenderspezifische und/oder prozessspezifische, eigenständige Daten wenigstens einer Informationsschicht und/oder Referenzdatenbank mittels einer dynamischen Schnittstelle implementierbar sind und die Gesamtinformationen über den Ablauf des Spritzgussprozesses in einer, angepasst an die eingegebenen Daten und/oder Daten von integrierter Rechenoperationen und der Daten der wenigstes einen Informationsschicht in der Ablaufstruktur auf einem Bildschirm darstellbar und in einer Dokumentationsebene dauerhaft ablegbar und verfügbar sind wobei dabei der Bediener durch den Prozess geführt wird und der Ablauf des Abmusterungsprozesses reproduzierbar ist und mit individuell einzugebenden Parametern in der Bedienerschicht, das Ergebnis und/oder die Rechenergebnisse des Abmusterungsprozesses veränderbar und/oder vorherbestimmbar und optimierbar sind.

2. Computergestütztes Leit-System und Verfahren zur Optimierung von Spritzguss Technik-Prozessen nach Anspruch 1,
**dadurch gekennzeichnet,**
**dass** die Ablaufstruktur zur Fehleranalyse im Abmusterungsprozess die Daten der Bedienerschicht und der wenigstens einen Informationsschicht mit Referenzwerten vergleicht und diese Informationen für den Bediener optimiert zur Verfügung stellt.

3. Computergestütztes Leit-System und Verfahren zur Optimierung von Spritzguss Technik-Prozessen nach Anspruch 1 und 2,
**dadurch gekennzeichnet,**
**dass** die Informationen über den Abmusterungsprozess bei der Fehleranalyse für den Bediener als optische Informationen, wie Beispielbilder auf einem Anzeigegerät darstellbar ausgeführt sind.

4. Computergestütztes Leit-System und Verfahren zur Optimierung von Spritzguss Technik-Prozessen nach Anspruch 1,
**dadurch gekennzeichnet,**
**dass** die über die Bedienerschicht einzugebenden Informationen Stammdaten der zu verarbeitenden Kunststoffe und/oder Maschinendaten sind.

5. Computergestütztes Leit-System und Verfahren zur Optimierung von Spritzguss Technik-Prozessen nach Anspruch 1,
**dadurch gekennzeichnet,**
**dass** die über die Bedienerschicht einzugebenden Informationen prozessabhängige Daten wie Temperatur und/oder Temperaturverläufe und/oder Spritzdruck sind.

6. Computergestütztes Leit-System und Verfahren zur Optimierung von Spritzguss Technik-Prozessen nach Anspruch 1, 4 oder 5
**dadurch gekennzeichnet,**
**dass** die eingegebenen Daten in der Bedienschicht kontinuierlich zusammen mit den Daten der wenigstens einen Informationsschicht berücksichtigt werden und davon abhängige Daten kontinuierlich erzeugt und/oder berechnet werden, welche mit Referenzen vergleichbar sind und die Ergebnisse dem Bediener zur Verfügung gestellt werden und/oder in einer Dokumentationsebene dauerhaft ablegbar und verfügbar sind.

7. Computergestütztes Leit-System und Verfahren zur Optimierung von Spritzguss Technik-Prozessen nach Anspruch 1,
**dadurch gekennzeichnet,**
**dass** die Ablaufstruktur angepasst an die anwenderspezifischen, mittels der Bedieneroberfläche eingegebenen, Daten variabel ausgeführt ist und dem Anwender kontinuierlich Informationen über erwartete Ergebnisse, abhängig von den individuellen Daten zur Verfügung stellt.

8. Computergestütztes Leit-System und Verfahren zur Optimierung von Spritzguss Technik-Prozessen nach Anspruch 1 oder 7
**dadurch gekennzeichnet,**
**dass** wenigstens eine Informationsschicht über eine Bilddatenbank verfügt mittels welcher dem Bediener Referenzabbildungen von Spritzgussteilen, angepasst an die individuell eingegebenen Daten unter Berücksichtigung der Referenzdaten der Informationsschicht auf einem Anzeigegerät zur Verfügung gestellt werden.

9. Computergestütztes Leit-System und Verfahren zur Optimierung von Spritzguss Technik-Prozessen nach Anspruch 1
**dadurch gekennzeichnet,**
**dass** das Leit-System und Verfahren zur Optimierung über wenigstens eine Kommunikations Schnittstelle zur Weitergabe der wenigstens in der Dokumentationsebene abgelegten Daten verfügt.
